# EUROPÄISCHE PATENTSCHRIFT

(11) **EP 2 888 499 B1**
(45) Veröffentlichungstag und Bekanntmachung des Hinweises auf die Patenterteilung: **03.10.2018**
(21) Anmeldenummer: 13753103.4
(22) Anmeldetag: 19.08.2013
(51) Int. Cl.: F16D 55/226, F16D 65/18

(54) **SCHEIBENBREMSE, INSBESONDERE FÜR NUTZFAHRZEUGE**
DISC BRAKE, IN PARTICULAR FOR UTILITY VEHICLES
FREIN À DISQUE, EN PARTICULIER POUR VÉHICULES UTILITAIRES

(30) Priorität: 22.08.2012 DE 102012016712
(43) Veröffentlichungstag der Anmeldung: 01.07.2015
(73) Patentinhaber: Wabco Radbremsen GmbH, 68229 Mannheim (DE)
(72) Erfinder: HENNING, Paul, 68723 Schwetzingen (DE); JUNGMANN, Hans-Christian, 69517 Gorxheimertal (DE)
(74) Vertreter: Leinweber & Zimmermann
(86) Internationale Anmeldenummer: PCT/EP2013/002488
(87) Internationale Veröffentlichungsnummer: WO 2014/029487

(56) Entgegenhaltungen:
- EP-A1- 0 790 428
- EP-B1- 1 384 913
- DE-A1- 2 614 321
- DE-A1- 10 148 472
- DE-A1- 19 619 488
- DE-A1-102009 004 424
- US-A1- 2005 029 056

## Beschreibung

Die Erfindung betrifft eine Scheibenbremse, insbesondere für Nutzfahrzeuge mit einem Bremssattel, einer Zuspanneinrichtung, die einen innerhalb des Bremssattels liegenden und sich an einem Abstützbereich des Bremssattels abstützenden Exzenter und einen innerhalb des Bremssattels liegenden Drehhebel zum Verdrehen des Exzenters aufweist, und einer außerhalb des Sattels liegenden ersten Betätigungseinrichtung, die über eine Funktionsöffnung mit dem Drehhebel gekoppelt ist, wobei der Bremssattel eine außerhalb des Abstützbereiches liegende erste Öffnung aufweist, durch die der Exzenter und der Drehhebel zum Montieren/Demontieren hindurchpassen.

Die Erfindung betrifft insbesondere denjenigen Teil der Bremse bzw. des Bremssattels, der auf einer Seite der Bremsscheibe eine drehhebelbetätigte Zuspanneinrichtung mit wenigstens einer längenverstellbaren Druckspindeleinrichtung aufnimmt und der am Bremssattelende zur Befestigung einer Betätigungseinrichtung dient. Diese Art von Sattel bzw. Zuspannkonstruktion hat sich mittlerweile im Nutzfahrzeugbereich, insbesondere bei Bremsengrößen von 17 Zoll bis 25 Zoll mit entsprechend hohen Bremsleistungen durchgesetzt, weil neben der Kompaktheit alle Zuspannteile vor äußeren Umwelteinflüssen geschützt im Bremssattel angeordnet sind.

Die DE-OS 40 32 886 zeigt eine vergleichbare Bremse mit einem Bremssattel, einer Zuspanneinrichtung und einer Betätigungseinrichtung. Bei dem Bremssattel ist der rückwärtige Teil, also der der Bremsscheibe abgewandte Teil, als gesondertes Sattelteil in Form eines Deckels ausgeführt, der entlang einer Trennlinie mit dem restlichen, endseitig haubenförmig ausgebildeten Sattelteil verschraubt ist. Der Deckel mit Funktionsöffnungen dient als Sattelverschluß, der Lagerung/Abstützung des Drehhebels und auch dem Anbau eines auf den Drehhebel einwirkenden Bremszylinders, der die Betätigungseinrichtung bildet. Dafür weist der Deckel einen Befestigungsflansch auf. Die inneren Sattelbearbeitungen sowie der Teileein- und -ausbau erfolgen bei diesem Satteltyp von der bremsscheibenabgewandten Seite bei abgenommenem Deckel. Da sämtliche Bremsreaktionskräfte bei Bremsbetätigung in den angeschraubten Sattelbereich (Deckel) eingeleitet werden, treten Verschraubungs-, Festigkeits- und Dichtprobleme auf. Zudem muß der Deckel aus einem entsprechend festerem Material sein. Er muß überdies auch in besonderer Weise ausgeführt werden, weil die Winkelanstellungen (Anstellwinkel) für die der Bremszylinderbefestigung dienende Flanschfläche dies jeweils entsprechend dem Einsatzfall der Bremse im Fahrzeug erforderlich macht.

Ausweislich des Oberbegriffs von Anspruch 1 geht die vorliegende Erfindung von der DE 195 15 063 C1 aus. Diese Schrift zeigt einen sogenannten Monoblocksattel. Mit anderen Worten weist sie insbesondere wegen der oben beschriebenen Nachteile keinen Deckel auf. Dafür ist der Bremssattel rückseitig (an seinem Ende) bis auf erforderliche Funktionsöffnungen geschlossen und somit zuspannseitig einteilig ausgeführt. Zur Bremsschreibe hin ist er aber zum Zwecke der Sattelbearbeitung und zum Teileein- und -ausbau entlang einer Trennlinie offen. Diese scheibenseitige Öffnung im Bremssattel wird durch einen (Blech-)Deckel verschlossen, der wenigstens eine zum Durchtritt einer Druckspindel notwendige Funktionsöffnung aufweist. Die innere Sattelbearbeitung kann nur unter großem Aufwand mit Spezialwerkzeugen von der Bremsscheibenseite her durch die genannte Öffnung hindurch erfolgen. Auch sind die Innenteile nur von dieser Seite und durch diese Öffnung hindurch zugänglich, wozu der Bremssattel auch noch von der Bremsscheibe getrennt werden muß. Unterschiedliche Anstellwinkel für die Stellungen des Bremszylinders erfordern gänzlich neue Gußmodelle.

Die DE 36 10 569 A1 zeigt einen Bremssattel "alter" Bauart, wo im oberen Sattelbereich nur eine radiale Teilöffnung als eng bemessene Zylinderöffnung der Größe vorhanden ist, die dem Durchmesser des Zylinderdeckels entspricht. Der Sattel wird hier durch die Membran des Zylinderdeckels abgedeckt. Sowohl die innere Sattelbearbeitung für die Hauptteile der Zuspanneinrichtung als auch deren Ein-/Ausbau selbst kann nur aus verschiedenen Ebenen erfolgen. Ein Bremszylinder ist nicht vorgesehen. Deshalb fehlt es auch an einer einschlägigen Flanschfläche.

Vergleichbare Bremsen bzw. Bremssättel sind bekannt aus der DE 196 19 488 A1, der EP 1 384 913 B1, der EP 0 790 428 A1 und der DE 10 2009 004 424 A1.

Die DE 26 14 321 C2 zeigt einen Bremssattel für eine hydraulische Betriebsbremse mit einer Kolbenzuspannung und einer Feststell- bzw. Parkbremse mittels eines auf den Bremskolben einwirkenden Hebels. Zur Hebelbetätigung weist der obere Sattelbereich wiederum nur eine eng bemessene radiale Teilöffnung auf, die durch ein nicht näher bezeichnetes bzw. erläutertes Sattelteil verschlossen werden soll. Dieses Teil weist im rohrförmigen Stutzen ein Innengewinde zum Einschrauben eines auf die Zuspannung einwirkenden, mit einem Außengewinde versehenen Bremszylinders auf. Mithin ist wiederum kein Flanschbereich zum Befestigen eines Bremszylinders vorgesehen. Sowohl die inneren Sattelbearbeitungen des Zylinderbereichs für den Hydraulikkolben und für die anderen Teile als auch der Teileein-/-ausbau kann nur aus verschiedenen Bearbeitungs- und Bestückungsebenen heraus erfolgen.

Angesichts der oben beschriebenen Nachteile liegt der Erfindung ausgehend von einer Scheibenbremse nach dem Oberbegriff von Anspruch 1 die Aufgabe zugrunde, die einschlägige Scheibenbremse derart weiterzuentwickeln, daß neben der Verbesserung bei der Herstellung, bei der Bearbeitung und bei der Teilebestückung auch ein wirtschaftlicher Materialeinsatz bei größerer Flexibilität des Satteleinsatzes erzielt werden kann, und zwar insbesondere auch im Hinblick auf steigende Anforderungen an die Sattelfestigkeit.

Erfindungsgemäß wird die gestellte Aufgabe dadurch gelöst, daß die erste Öffnung von einem abnehmbaren Deckel verschlossen ist, der außerhalb des Abstützbereichs liegt, an dem die erste Betätigungseinrichtung angebracht ist.

Erfindungsgemäß kommen damit dem Deckel mehrere Aufgaben zu. Er dient zum einen dazu, die erste Öffnung zu verschließen. Zum anderen dient er zum Anbringen bzw. Halten der Betätigungseinrichtung. Ferner hält er einen Niederhaltebügel auf der Zuspannseite. Da die von dem Deckel verschlossene erste Öffnung außerhalb des Abstützbereichs des Exzenters liegt, muß der Deckel aber keine Zuspann- oder Bremskräfte aufnehmen. Er kann daher aus einem Material geringerer Festigkeit und mithin geringeren Gewichts hergestellt werden. Beispielsweise können gießtechnisch hergestellte Leichtlegierungen oder andere Materialien zur Anwendung kommen, wodurch Material- und Gewichtseinsparungen erzielt werden können.

Da der Deckel die Betätigungseinrichtung trägt, kann die von ihm verschlossene Öffnung nicht der Bremsscheibe zugewendet sein. Es ist daher ein Abbau von der Bremsscheibe nicht erforderlich, wenn die Öffnung beispielsweise zum Teileein- oder -ausbau benutzt wird.

Der Exzenter und der Drehhebel gehören erfindungsgemäß bevorzugt zu einer Baugruppe, die in vormontiertem Zustand durch die erste Öffnung paßt.

Dadurch werden der Zusammenbau und die Demontage der Bremse stark vereinfacht.

Eine weitere Vereinfachung kann dadurch erzielt werden, dass auch eine Nachstellmutter der Zuspanneinrichtung zu der Baugruppe gehört, die in vormontiertem Zustand durch die erste Öffnung paßt.

Erfindungsgemäß bevorzugt ist weiterhin eine drehfest, aber axial verschieblich gehaltene Druckspindel vorgesehen. Diese Druckspindel stellt einen Teil einer längenveränderlichen Nachstelleinrichtung dar.

Die Funktionsöffnung, über die die erste Betätigungseinrichtung mit dem Drehhebel gekoppelt ist, ist erfindungsgemäß bevorzugt an dem Deckel ausgebildet. Dadurch ist eine besonders einfache Konstruktion möglich.

Der Deckel weist nach der Erfindung eine erste Flanschfläche zum Anflanschen an dem Bremssattel und eine zweite Flanschfläche zum Anflanschen der ersten Betätigungseinrichtung auf.

Dadurch ist eine besonders einfache Art der Anbringung des Deckels und/oder der Betätigungseinrichtung realisiert.

Die erste und/oder die zweite Flanschfläche kann/können mit der Bremsenachse einen spitzen Winkel einschließen.

Auch diese Ausgestaltung dient der Verringerung des Bauraumbedarfs, weil dadurch der Sattel zu seinem Ende hin "schlanker" gestaltet werden kann.

Der Exzenter ist nach einer weiter bevorzugten Ausführungsform der Erfindung an einer quer zur Bremsenachse liegenden Bremswelle angebracht. Die Bremswelle kann dabei auch Teil derjenigen Baugruppe sein, die in vormontiertem Zustand durch die erste Öffnung paßt.

Erfindungsgemäß weiter bevorzugt weist der Deckel einen haubenförmigen Bereich auf. Dies dient dazu, Raum für das Verschwenken des Drehhebels innerhalb des Sattels zur Verfügung zu stellen, ohne daß der Sattel insgesamt übermäßig viel Bauraum einnimmt.

Der weiteren Bauraumreduzierung dient eine Ausgestaltung, bei der die Außen- und/oder die Innenabmessungen des Bremssattels in Umfangsrichtung der Bremsscheibe im Bereich des Bremsbelages größer sind als in dem Abstützbereich.

So kann beispielsweise der Sattel in demjenigen Bereich, in dem die Zuspanneinrichtung liegt, eine insgesamt trapezförmige Kontur in der Draufsicht haben, wobei die breitere Seite der Bremsscheibe zugewandt ist und die schmalere Seite am Ende des Sattels liegt.

Zur Stabilisierung des Bremssattels können Zugstreben vorgesehen sein, die beim Bremsen Zuspannkräfte aufnehmen.

Diese Zugstreben können rippenförmig sein, wobei ihre Abmessungen in Richtung von dem Abstützbereich zu der Bremsscheibe hin zunehmen.

Wiederum kann sich dadurch die bereits oben erwähnte Trapezform ergeben, die sich als besonders günstig erwiesen hat.

Erfindungsgemäß weiter bevorzugt ist eine zweite Öffnung vorgesehen, durch die ein innerhalb des Bremssattels liegender Teil einer zweiten Betätigungseinrichtung inspiziert werden kann.

So können nämlich beispielsweise zwei Betätigungseinrichtungen vorgesehen sein, von denen eine zu einer Betriebsbremse und die andere zu einer Feststellbremse gehört.

Die erste und die zweite Öffnung können dabei miteinander kombiniert sein. Das heißt, sie können ohne eine Trennwand dazwischen ausgeführt sein.

Dabei kann erfindungsgemäß weiter bevorzugt vorgesehen sein, daß der Deckel in angebrachtem Zustand die erste und die zweite Öffnung verschließt.

Damit wird dem Deckel wiederum eine Mehrfachfunktion zugewiesen, nämlich daß er nicht nur die erste, sondern auch die zweite Öffnung verschließt.

Entsprechend den obigen Erläuterungen ist es erfindungsgemäß insbesondere vorgesehen, daß der Bremssattel in einer auf die Ebene der Bremsscheibe zulaufende Trennlinie derart geteilt ist, daß das untere und alle Teile der Zuspanneinrichtung aufnehmende Gehäuseteil auch alle Brems-/Zuspann-/Reaktionskräfte aufnimmt und das obere Gehäuseteil, welches das untere Gehäuseteil des Sattels gänzlich/vollständig dichtend abdeckt, lediglich zur Befestigung der Betätigungseinrichtung/des Bremszylinders an einem am oberen Gehäuseteil einseitig ausgebildeten Flanschbereich dient und somit weitestgehend frei von Brems-/Zuspann-/Reaktionskräften ist.

Der untere Gehäusebereich kann insbesondere in einer offenen Kastenform ausgebildet sein, deren umfängliche zargenähnliche Wandung entlang der Trennlinie einen rahmenartigen Flanschabschnitt darstellt, auf den das plattenförmige und eine Hauben- und Flanschform aufweisende obere Gehäuseteil aufgeschraubt wird. Der Flansch entlang der Trennlinie ist flach bzw. eben, was vorteilhaft für die Herstellung, Bearbeitung und Montage ist.

Diese Konstruktion bringt viele Vorteile mit sich. Zum einen ist die gießtechnische Herstellung gegenüber geschlossenen Gehäuseteilen einfacher. Weiterhin kann durch die offene Kastenform die innere Sattelbearbeitung zur Lagerung der Hauptteile der Zuspanneinrichtung sowie auch der Teileeinbau aus einer frei zugänglichen Ebene heraus erfolgen. Sind die Funktionsteile in das bearbeitete, aber noch offene Gehäuseteil eingebaut, können bei der Großserienherstellung mit modernen Kontrolleinrichtungen, wie beispielsweise Videoüberwachung, sehr genaue Funktionskontrollen durchgeführt und Lagepositionen überprüft werden, was bei den herkömmlichen und weitestgehend geschlossenen Bremssätteln wegen mangelnder Zugänglichkeit nicht möglich war.

Ein weiterer Vorteil kann sich auch im Servicefall bei der Bremsenwartung einstellen. Es muß dafür lediglich das Oberteil von dem die Zuspannung tragenden Unterteil entfernt werden, um die Teile zugänglich zu machen. Ein Sattelabbau von der Bremsscheibe ist nicht erforderlich, anders als bei Bremssätteln, die eine bremsscheibenseitige Öffnung für diese Zwecke aufweisen.

Dadurch, daß gegenüber dem unteren und kastenförmigen Gehäuseteil der obere Gehäuseteil nicht den oben bereits beschriebenen Belastungen unterliegt, kann in vorteilhafter Weise das obere Gehäuseteil aus einem Material geringerer Festigkeit und geringeren Gewichts hergestellt werden.

Ebenso flexibel kann vorteilhaft der Einsatzfall des Bremssattels im Fahrzeug hinsichtlich des Anstellwinkels des Bremszylinders realisiert werden, weil lediglich das obere Gehäuseteil dementsprechend mit dem Flanschbereich auszubilden ist, während das untere Gehäuseteil unverändert bleiben kann. Ein vollständig neues Gußmodell, wie es bei herkömmlichen geschlossenen Sätteln erforderlich ist, muß demnach nicht angefertigt werden.

Zur Stabilisierung gegen elastische Sattelverformungen ist in vorteilhafter Weise der hintere Sattelbereich, an dem sich der exzentrisch wirkende Drehhebel abstützt, entsprechend der Drehhebelbreite schmaler als der der Bremsscheibe zugewandte Bereich. Dadurch ist die äußere Sattelkontur annähernd trapezförmig und insgesamt platzsparend.

Unter Beibehaltung der Sattelstabilität und zur Material- und Gewichtseinsparung trägt weiterhin vorteilhaft bei, wenn beidseitig des die Zuspannung aufnehmenden offenen Sattelteils die äußere Struktur durch schräg verlaufende rippenförmige Guß-Streben gebildet wird, die Zugstreben darstellen.

Im folgenden ist die Erfindung anhand eines bevorzugten Ausführungsbeispiels unter Bezugnahme auf die beiliegende Zeichnung mit weiteren Einzelheiten näher erläutert.

### Dabei zeigen

- Fig. 1: eine schematische perspektivische Ansicht eines Ausführungsbeispiels des erfindungsgemäßen Bremssattels,
- Fig. 2: eine schematische perspektivische Ansicht eines Ausführungsbeispiels der erfindungsgemäßen Scheibenbremse mit dem Bremssattel nach Fig. 1,
- Fig. 3: eine schematische Seitenansicht der Scheibenbremse nach Fig. 2,
- Fig. 4: eine schematische Draufsicht auf die Scheibenbremse

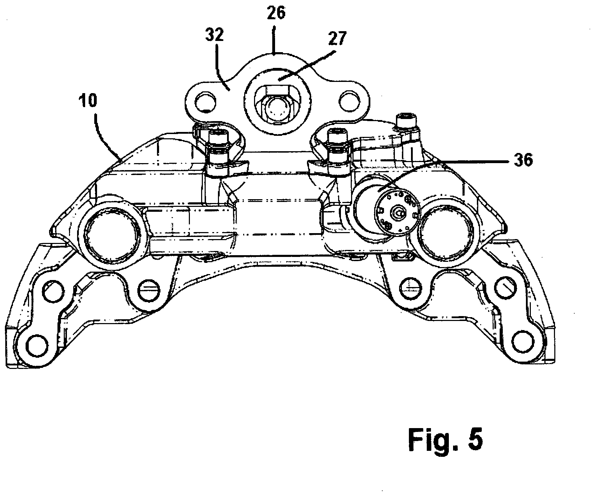

- Fig. 5: eine schematische Ansicht der Scheibenbremse von ihrem "Ende" her gesehen, und

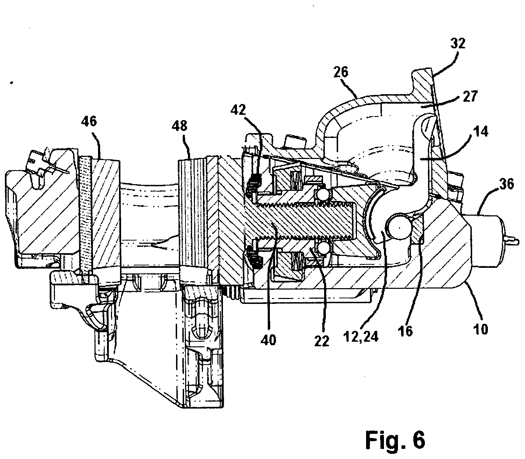

- Fig. 6: eine schematische Schnittansicht der Bremse.

Zu der in der Zeichnung dargestellten Scheibenbremse nach einem Ausführungsbeispiel der Erfindung gehören ein Bremssattel 10, ein Exzenter 12 und ein Drehhebel 14. Der Exzenter 12 und der Drehhebel 14 sind Teil einer Zuspanneinrichtung und sind innerhalb des Bremssattels 10 angeordnet.

Der Exzenter 12 stützt sich (indirekt) an einem Abstützbereich 16 ab. Zum Betätigen der Zuspanneinrichtung dient ein pneumatischer Bremszylinder 18. Er kann mit oder ohne Federspeicherfunktion ausgeführt sein.

Der Bremssattel 10 weist eine erste Öffnung 20 auf, durch die der Exzenter 12 und der Drehhebel 14 hindurch montiert bzw. demontiert werden können. Mit anderen Worten passen die genannten Teile durch die Öffnung 20 hindurch, um in den Innenraum des Bremssattels 10 verbracht bzw. daraus herausgenommen werden zu können. Dies kann auch in Form einer vormontierten Baueinheit geschehen, zu der mindestens der Exzenter 12 und der Drehhebel 14 gehören. Auch eine Nachstellmutter 22 kann zu der vormontierten Baueinheit gehören, die durch die erste Öffnung 20 hindurchpaßt. Das gleiche gilt für eine Bremswelle 24, die den Exzenter 12 trägt.

Die Montageöffnung 20 ist von einem abnehmbaren Deckel 26 verschlossen, der den Innenraum des Bremssattels 10 abdichtet, bis auf eine Funktionsöffnung 27, durch die hindurch eine in der Zeichnung nicht dargestellte Kolbenstange des Bremszylinders 18 mit dem Drehhebel 14 gekoppelt ist.

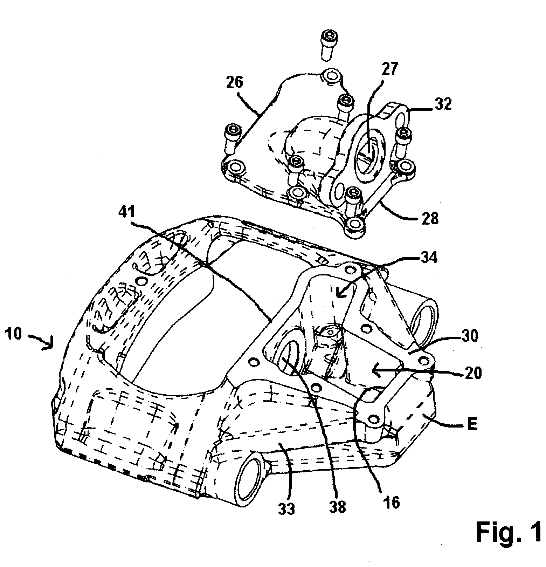

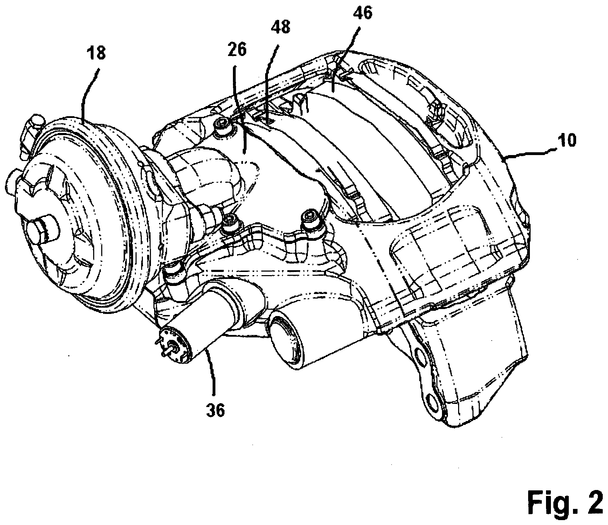

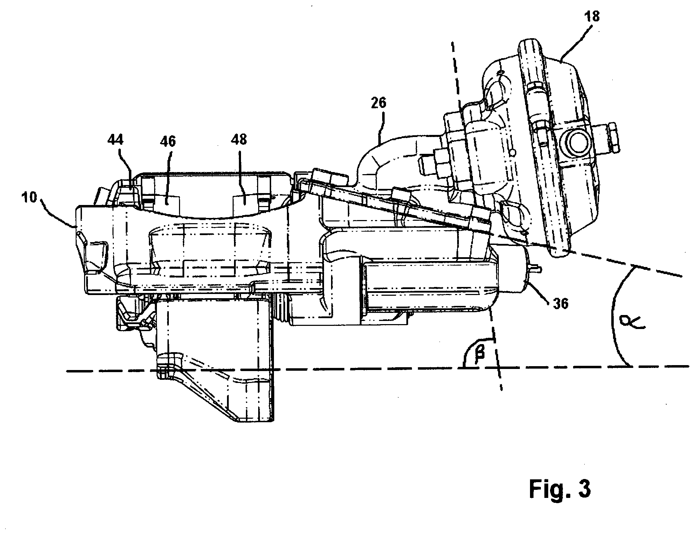

Damit der Drehhebel 14 in dem Innenraum verschwenkbar ist, ist der Deckel 26 in dem einschlägigen Bereich haubenförmig ausgebildet. Der Deckel 26 weist eine erste Flanschfläche 28 zum Anflanschen an einer entsprechenden Flanschfläche 30 des Bremssattels 10 sowie eine zweite Flanschfläche 32 zum Anflanschen des Bremszylinders 18 auf. Alle Flanschflächen sind eben. Dazu dienen bei dem Ausführungsbeispiel nach Fig. 1 sechs über den Umfang des Deckels 26 verteilte Schrauben. Es können aber auch mehr oder weniger Schrauben sein. Zum Anflanschen des Bremszylinders 18 dienen gemäß Fig. 2 bis 4 zwei Schrauben, deren Muttern zur Bremsscheibe hin zeigen. Auch hier können mehr oder weniger Schrauben (Muttern) verwendet werden.

Die Flanschflächen 28 und 30 bilden mit der Bremsenachse A einen spitzen Winkel a, der in dem dargestellten Ausführungsbeispiel etwa 13° beträgt. Die zweite Flanschfläche 32 bildet mit der Bremsenachse A einen Winkel β, der in dem dargestellten Ausführungsbeispiel bei etwa 82° liegt. Beide Anstellwinkel α und β sind je nach Erfordernis variierbar.

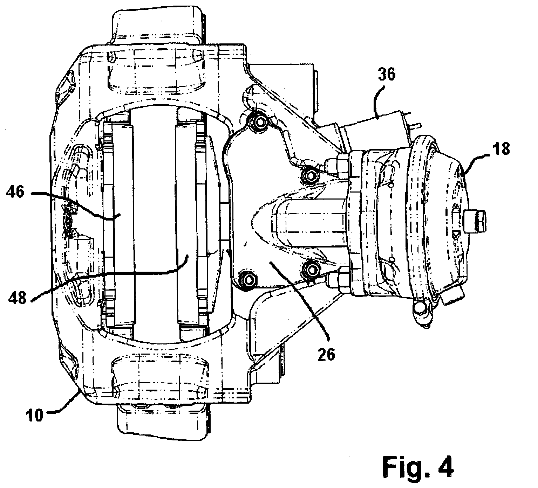

Wie insbesondere den Figuren 1 und 4 zu entnehmen ist, verjüngt sich der Bremssattel 10 zu seinem Ende E hin, so daß er auf derjenigen Seite, auf der er in seinem Innenraum die Zuspanneinrichtung aufnimmt, eine in etwa trapezförmige Gestalt hat. In dem genannten Bereich, also dort, wo der Bremssattel 10 die Zuspanneinrichtung aufnimmt, trägt er an seiner Außenseite rippenförmige Zugstreben, die sich zum Ende E hin verjüngen und von denen eine beispielhaft mit der Bezugszahl 33 bezeichnet ist.

Neben der ersten Öffnung 20 weist der Bremssattel 10 noch eine zweite Öffnung auf, die mit der Bezugszahl 34 bezeichnet ist. Die beiden Öffnungen 20 und 34 sind zu einer einzigen Öffnung miteinander kombiniert. Sie können allerdings auch getrennt voneinander vorgesehen sein. In dem dargestellten Ausführungsbeispiel ergibt sich eine insgesamt L-förmige kombinierte Öffnung. Die zweite Öffnung 34 stellt eine Inspektionsöffnung für eine zweite Betätigungseinrichtung 36 dar, bei der es sich in dem dargestellten Ausführungsbeispiel um einen elektromechanischen Antrieb handelt. Während der Bremszylinder 18 zu einer Betriebsbremse gehört, gehört der elektromechanische Antrieb 36 zu einer Feststellbremse. Beide wirken sie aber auf die Zuspanneinrichtung ein, zu der insbesondere die Nachstellmutter 22 gehört. Zur Kopplung des elektromechanischen Antriebs 36 mit der Nachstellmutter 22 dient ein Zahnradgetriebe, das in der Zeichnung nicht im einzelnen dargestellt ist. Während der elektromechanische Antrieb 36 teilweise außerhalb des Bremssattels angeordnet ist, liegt das erwähnte Getriebe zum Koppeln des Antriebs 36 mit der Nachstellmutter 22 innerhalb des Bremssattels 10 und ist über die Inspektionsöffnung 34 inspizierbar.

Der Deckel 26 dient zum dichtenden Verschließen beider Öffnung 20 und 34.

Wie bereits oben erwähnt, bilden die Flanschflächen 28 und 30 mit der Bremsenachse A einen spitzen Winkel α von etwa 14°. Mit anderen Worten verläuft eine Trennlinie zwischen dem Bremssattel 10 und dem Deckel 26 schräg zu dem Ende E des Bremssattels 10 hin abfallend. Dies hat aus Gründen der Stabilität den Vorteil, daß eine Funktionsöffnung 38 zum Durchführen/Abstützen einer Druckspindel 40 gänzlich von der entsprechenden Wandung 41 umschlossen wird. Damit sich dann auch sehr einfach und ohne weitere Hilfsmittel, wie dies beispielsweise bei einem Monoblocksattel über zusätzliche Verschlußplatten erforderlich ist, die innere Sattelabdichtung durch formelastische Dichtungsmittel (Faltenmanschetten 42 o.ä.) realisierbar.

Mit der Bezugszahl 44 ist schematisch ein Bremsbelagniederhaltesystem mit einem Niederhaltebügel gezeigt, mit dem Bremsbeläge 46, 48 federelastisch in deren Lagerungen vorgespannt werden. Der Niederhaltebügel wird zuspannseitig von dem Deckel 26 gehalten.

Es wird ausdrücklich darauf hingewiesen, daß die Erfindung nicht nur auf die beispielhaft dargestellte Zuspanneinrichtung anzuwenden ist. Die Sattelausführung mit dem erfindungsgemäßen Deckel kann nämlich auf alle drehhebelbetätigten Zuspanneinrichtungen angewendet werden, also auch auf Zuspanneinrichtungen mit mehr als einer Druckspindel und auch mehr als einer Nachstellmutter. Das gleiche gilt auch für die Einbringung der Bremsbetätigung auf den Drehhebel. Sie muß nicht durch einen pneumatischen Bremszylinder mit/ohne Federspeicherfunktion erfolgen. Vielmehr sind auch elektromechanische und elektrohydraulische Betätigungen einsetzbar.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse, insbesondere für Nutzfahrzeuge, mit
einem Bremssattel (10),
einer Zuspanneinrichtung, die
- einen innerhalb des Bremssattels liegenden und sich an einem Abstützbereich (16) des Bremssattels abstützenden Exzenter (12) und
- einen innerhalb des Bremssattels liegenden Drehhebel (14) zum Verdrehen des Exzenters aufweist, und
einer außerhalb des Sattels liegenden ersten Betätigungseinrichtung (18), die über eine Funktionsöffnung (27) mit dem Drehhebel gekoppelt ist,
wobei der Bremssattel eine außerhalb des Abstützbereiches liegende erste Öffnung (20) aufweist, durch die der Exzenter und der Drehhebel zum Montieren/Demontieren hindurchpassen,
**dadurch gekennzeichnet, dass**
die erste Öffnung (20) von einem abnehmbaren Deckel (26) verschlossen ist,
der außerhalb des Abstützbereichs (16) liegt,
an dem die erste Betätigungseinrichtung (18) angebracht ist und
der eine erste Flanschfläche (28) zum Anflanschen an dem Bremssattel (10) und eine zweite Flanschfläche (32) zum Anflanschen der ersten Betätigungseinrichtung (18) aufweist.

2. Scheibenbremse nach Anspruch 1, **dadurch gekennzeichnet, dass** der Exzenter (12) und der Drehhebel (14) zu einer Baugruppe gehören, die in vormontiertem Zustand durch die erste Öffnung (20) passt.

3. Scheibenbremse nach Anspruch 2, **gekennzeichnet durch** eine zu der Baugruppe gehörende Nachstellmutter (22).

4. Scheibenbremse nach einem der vorangehenden Ansprüche, **gekennzeichnet durch** eine drehfest, aber axial verschieblich gehaltene Druckspindel (40).

5. Scheibenbremse nach einem der vorangehenden Ansprüche, **dadurch gekennzeichnet, dass** die Funktionsöffnung (27) an dem Deckel (26) ausgebildet ist.

6. Scheibenbremse nach einem der vorangehenden Ansprüche, **dadurch gekennzeichnet, dass** die erste und/oder die zweite Flanschfläche (28, 32) mit der Bremsenachse (A) einen spitzen Winkel (a) einschließt/einschließen.

7. Scheibenbremse nach einem der vorangehenden Ansprüche, **dadurch gekennzeichnet, dass** der Exzenter (12) an einer quer zur Bremsenachse (A) liegenden Bremswelle (24) angebracht ist.

8. Scheibenbremse nach einem der vorangehenden Ansprüche, **dadurch gekennzeichnet, dass** der Deckel (26) einen haubenförmigen Bereich aufweist.

9. Scheibenbremse nach einem der vorangehenden Ansprüche, **dadurch gekennzeichnet, dass** die Außen- und/oder die Innenabmessungen des Bremssattels (10) in Umfangsrichtung der Bremsscheibe im Bereich des Bremsbelages (46, 48) größer sind als in dem Abstützbereich (16).

10. Scheibenbremse nach einem der vorangehenden Ansprüche, **dadurch gekennzeichnet, dass** der Bremssattel Zugstreben (33) aufweist, die beim Bremsen Zuspannkräfte aufnehmen.

11. Scheibenbremse nach Anspruch 10, **dadurch gekennzeichnet, dass** die Zugstreben (33) rippenförmig sind und ihre Abmessungen in Richtung von dem Abstützbereich (16) zu der Bremsscheibe hin zunehmen.

12. Scheibenbremse nach einem der vorangehenden Ansprüche, **gekennzeichnet durch** eine zweite Öffnung (34), durch die ein innerhalb des Bremssattels (10) liegender Teil einer zweiten Betätigungseinrichtung (36) inspiziert werden kann.

13. Scheibenbremse nach Anspruch 12, **dadurch gekennzeichnet, dass** die erste und die zweite Öffnung (20, 34) miteinander kombiniert sind.

14. Scheibenbremse nach Anspruch 12 oder 13, **dadurch gekennzeichnet, dass** der Deckel (26) in angebrachtem Zustand die erste und die zweite Öffnung (20, 34) verschließt.

## Claims

1. Disc brake, in particular for commercial vehicles, having
a brake calliper (10),
a brake application device which
- has an eccentric (12) which lies within the brake calliper and is supported on a supporting region (16) of the brake calliper, and
- a rotary lever (14) which lies within the brake calliper for rotating the eccentric, and
a first actuating device (18) which lies outside the calliper and is coupled to the rotary lever via a functional opening (27),
the brake calliper having a first opening (20) which lies outside the supporting region and through which the eccentric and the rotary lever pass for assembly/dismantling,
**characterized in that**
the first opening (20) is closed by a removable cover (26) which lies outside the supporting region (16), on which cover (26) the first actuating device (18) is attached, and which cover (26) has a first flange face (28) for flange-connecting on the brake calliper (10) and a second flange face (32) for flange-connecting the first actuating device (18).

2. Disc brake according to Claim 1, **characterized in that** the eccentric (12) and the rotary lever (14) belong to an assembly which passes through the first opening (20) in the preassembled state.

3. Disc brake according to Claim 2, **characterized by** an adjusting nut (22) which belongs to the assembly.

4. Disc brake according to one of the preceding claims, **characterized by** a pressure spindle (40) which is held in a rotationally fixed but axially displaceable manner.

5. Disc brake according to one of the preceding claims, **characterized in that** the functional opening (27) is configured on the cover (26).

6. Disc brake according to one of the preceding claims, **characterized in that** the first and/or the second flange face (28, 32) encloses/enclose an acute angle (α) with the brake axis (A).

7. Disc brake according to one of the preceding claims, **characterized in that** the eccentric (12) is attached on a brake shaft (24) which lies transversely with respect to the brake axis (8).

8. Disc brake according to one of the preceding claims, **characterized in that** the cover (26) has a hood-shaped region.

9. Disc brake according to one of the preceding claims, **characterized in that** the external and/or the internal dimensions of the brake calliper (10) in the circumferential direction of the brake disc are greater in the region of the brake lining (46, 48) than in the supporting region (16).

10. Disc brake according to one of the preceding claims, **characterized in that** the brake calliper has tie rods (33) which absorb brake application forces during the braking operation.

11. Disc brake according to Claim 10, **characterized in that** the tie rods (33) are rib-shaped and their dimensions increase in the direction from the supporting region (16) towards the brake disc.

12. Disc brake according to one of the preceding claims, **characterized by** a second opening (34), through which a part of a second actuating device (36) can be inspected, which part lies within the brake calliper (10) .

13. Disc brake according to Claim 12, **characterized in that** the first and the second opening (20, 34) are combined with one another.

14. Disc brake according to Claim 12 or 13, **characterized in that**, in the attached state, the cover (26) closes the first and the second opening (20, 34).

## Revendications

1. Frein à disque, en particulier pour véhicules utilitaires, avec
un étrier de frein (10),
un dispositif de serrage, qui présente
- un excentrique (12) situé à l'intérieur de l'étrier de frein et s'appuyant sur une zone d'appui (16) de l'étrier de frein et
- un levier rotatif (14) situé à l'intérieur de l'étrier de frein pour faire tourner l'excentrique, et
un premier dispositif d'actionnement (18) situé à l'extérieur de l'étrier, qui est couplé au levier rotatif par une ouverture de fonction (27),
dans lequel l'étrier de frein présente une première ouverture (20) située à l'extérieur de la zone d'appui, à travers laquelle s'ajustent l'excentrique et le levier rotatif pour le montage/démontage,
**caractérisé en ce que**
la première ouverture (20) est fermée par un couvercle amovible (26),
qui est situé en dehors de la zone d'appui (16),
sur lequel le premier dispositif d'actionnement (18) est installé, et
qui présente une première face de bride (28) pour la fixation à l'étrier de frein (10) et une seconde face de bride (32) pour la fixation du premier dispositif d'actionnement (18).

2. Frein à disque selon la revendication 1, **caractérisé en ce que** l'excentrique (12) et le levier rotatif (14) font partie d'un module, qui dans l'état préassemblé s'ajuste à travers la première ouverture (20) .

3. Frein à disque selon la revendication 2, **caractérisé par** un écrou de réglage (22) faisant partie du module.

4. Frein à disque selon l'une quelconque des revendications précédentes, **caractérisé par** une broche de pression (40) maintenue de façon fixe en rotation mais déplaçable axialement.

5. Frein à disque selon l'une quelconque des revendications précédentes, **caractérisé en ce que** l'ouverture de fonction (27) est formée sur le couvercle (26).

6. Frein à disque selon l'une quelconque des revendications précédentes, **caractérisé en ce que** la première et/ou la seconde face(s) de bride (28, 32) forme/forment avec l'axe du frein (A) un angle aigu (α).

7. Frein à disque selon l'une quelconque des revendications précédentes, **caractérisé en ce que** l'excentrique (12) est monté sur un arbre de frein (24) situé transversalement à l'axe de frein (A).

8. Frein à disque selon l'une quelconque des revendications précédentes, **caractérisé en ce que** le couvercle (26) présente une région en forme de capot.

9. Frein à disque selon l'une quelconque des revendications précédentes, **caractérisé en ce que** les dimensions extérieures et/ou intérieures de l'étrier de frein (10) dans la direction périphérique du disque de frein sont plus grandes dans la région de la garniture de frein (46, 48) que dans la zone d'appui (16).

10. Frein à disque selon l'une quelconque des revendications précédentes, **caractérisé en ce que** l'étrier de frein présente des tirants (33), qui reprennent des forces de serrage lors du freinage.

11. Frein à disque selon la revendication 10, **caractérisé en ce que** les tirants (33) sont en forme de nervures et leurs dimensions augmentent dans la direction de la zone d'appui (16) au disque de frein.

12. Frein à disque selon l'une quelconque des revendications précédentes, **caractérisé par** une seconde ouverture (34), à travers laquelle une partie d'un second dispositif d'actionnement (36) située à l'intérieur de l'étrier de frein (10) peut être inspectée.

13. Frein à disque selon la revendication 12, **caractérisé en ce que** la première et la seconde ouvertures (20, 34) sont combinées l'une avec l'autre.

14. Frein à disque selon la revendication 12 ou 13, **caractérisé en ce que** le couvercle (26) dans son état mis en place ferme la première et la seconde ouvertures (20, 34).
